(19) Europäisches Patentamt
European Patent Office
Office européen des brevets

(11) EP 4 755 724 A1

(12) **EUROPEAN PATENT APPLICATION**
published in accordance with Art. 153(4) EPC

(43) Date of publication:
10.06.2026 Bulletin 2026/24

(51) International Patent Classification (IPC):
B60R 13/08 (2006.01)   B32B 5/26 (2006.01)
D04H 1/46 (2012.01)   D04H 1/498 (2012.01)
G10K 11/168 (2006.01)

(21) Application number: 24877090.1

(52) Cooperative Patent Classification (CPC):
B32B 5/26; B60R 13/08; D04H 1/46; D04H 1/498;
G10K 11/168

(22) Date of filing: 03.10.2024

(86) International application number:
PCT/JP2024/035416

(87) International publication number:
WO 2025/079492 (17.04.2025 Gazette 2025/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.10.2023 JP 2023177624

(71) Applicant: Kotobukiya Fronte Co., Ltd.
Tokyo 105-0003 (JP)

(72) Inventor: HOSHI, Genki
Gyoda-shi, Saitama 361-0021 (JP)

(74) Representative: Huebner, Stefan Rolf
SR Huebner PatentanwaltsG mbH
Postfach 101317
80087 München (DE)

(54) **VEHICULAR INTERIOR/EXTERIOR MATERIAL**

(57) An automotive interior and exterior material of which the airflow resistance can be easily controlled and which is excellent in rigidity and weight reduction is provided.

An automotive interior and exterior material 1 includes: a fiber material layer 10 made of a fiber material containing resin fiber having a melting point of 210°C or less; and a film-formed portion 10 having a film shape obtained by melting the fiber material on one surface of the fiber material layer. The film area ratio, which is the percentage of the area of a film portion of the film-formed portion 10 with respect to the surface area of the film-formed portion 11, is 35 to 99%.

FIG. 1

# EP 4 755 724 A1

**Description**

TECHNICAL FIELD

The present invention relates to automotive interior and exterior materials.

BACKGROUND ART

The airflow resistance of automotive interior and exterior materials can be changed by changing the density of the fiber material constituting the automotive interior and exterior materials. The sound absorption performance of automotive interior and exterior materials has conventionally been controlled by changing the density of the fiber material. However, in order to increase the airflow resistance for sound absorption performance, the density of the fiber material needs to be increased. That is, this conventional technique has a problem in that it is difficult to reduce the weight of automotive interior and exterior materials.

Patent Document 1 describes a sound-absorbing material, in which (A) a nonwoven fabric having an area weight of 150 to 800 g/m$^2$ and a bulk density of 0.01 to 0.2 g/cm$^3$ and (B) a skin material having an air permeability of 50 cc/cm$^2$/sec or less, measured based on JIS L-1096, are laminated. The skin material is a spunbond nonwoven fabric made of long fibers or a wet-laid nonwoven fabric made of short fibers.

REFERENCE DOCUMENT LIST

PATENT DOCUMENT

Patent Document 1: Japanese Patent No. 4054826

SUMMARY OF THE INVENTION

PROBLEM TO BE SOLVED BY THE INVENTION

The present inventor has studied Patent Document 1, and found that Patent Document 1 does not take the rigidity of the sound-absorbing material as an exterior material into consideration. In addition, because the nonwoven fabric and the skin material are separately manufactured and then laminated, when the laminated structure is molded into a predetermined shape, the elongation rate of the skin material varies depending on the portion to be molded. That is, the air permeability varies depending on the molded portion. Because this greatly affects the sound absorption performance, the conventional technique has a problem in that it is difficult to control the air permeability as a molded article.

The present invention has been made in view of the above problems, and it is an object of the present invention to provide an automotive interior and exterior material of which the airflow resistance can be easily controlled and which is excellent in rigidity and weight reduction.

MEANS FOR SOLVING THE PROBLEM

In order to achieve the above object, an automotive interior and exterior material according to the present invention includes: a fiber material layer made of a fiber material containing resin fiber having a melting point of 210°C or less; and a film-formed portion having a film shape obtained by melting the fiber material on one surface of the fiber material layer, wherein the film area ratio, which is the percentage of the area of a film portion of the film-formed portion with respect to a surface area of the film-formed portion, is 35 to 99%.

The automotive interior and exterior material may further include a base material layer laminated on a surface of the fiber material layer, the surface being opposite to the film-formed portion.

It is preferable that the film area ratio of the fiber material layer be 35 to 95%.

It is preferable that the airflow resistance of the automotive interior and exterior material be 500 to 1500 Ns/m$^3$.

It is preferable that the content of the resin fiber in the fiber material layer be 30% or more and less than 90%.

The fiber material may be subjected to a water repellent treatment.

The fiber material layer and the base material layer may be needle-punched.

EFFECTS OF THE INVENTION

As described above, according to the present invention, a film-formed portion having a film area ratio of 35 to 99% is formed by melting one surface of a fiber material layer into a film shape. In this way, it is possible to provide an automotive interior and exterior material of which the airflow resistance can be controlled without changing the density of the fiber material layer and which can achieve weight reduction. In addition, because the one surface of the fiber material layer is formed into a film shape, this automotive interior and exterior material has excellent rigidity.

BRIEF DESCRIPTION OF THE DRAWINGS

[FIG. 1] FIG. 1 is a cross-sectional view schematically illustrating an embodiment of an automotive interior and exterior material according to the present invention.
[FIG. 2] FIG. 2 is a cross-sectional view schematically illustrating another embodiment of the automotive interior and exterior material according to the present invention.
[FIG. 3] FIG. 3 is a perspective view schematically illustrating an example in which the automotive interior and exterior material according to the present invention is used as a fender liner.
[FIG. 4] FIG. 4 is a cross-sectional view of the fender liner and the surrounding area thereof, taken along line A-A' in FIG. 3.
[FIG. 5] FIG. 5 is a perspective view schematically illustrating an example in which the automotive interior and exterior material according to the present invention is used as a trunk side trim.
[FIG. 6] FIG. 6 is a cross-sectional view of the trunk side trim and the surrounding area thereof, taken along line A-A' in FIG. 3.
[FIG. 7] FIG. 7 is a perspective view schematically illustrating an example in which the automotive interior and exterior material according to the present invention is used as a floor carpet.
[FIG. 8] FIG. 8 is a cross-sectional view illustrating a relationship between the floor carpet and the surrounding area thereof, taken along line B-B' in FIG. 7.
[FIG. 9] FIG. 9 is a flow diagram schematically illustrating an example of a method for manufacturing the automotive interior and exterior material according to the present invention.
[FIG. 10] FIG. 10 is an image obtained by observing the surface of a film-formed portion of the automotive interior and exterior material according to the present invention with a microscope.
[FIG. 11] FIG. 11 is an image in which the height difference in the image in FIG. 10 is displayed by color mapping.
[FIG. 12] FIG. 12 is an image in which the hole portions in the image in FIG. 11 are recognized.
[FIG. 13] FIG. 13 is a graph illustrating the measurement results of the film area ratio and the airflow resistance in examples.

MODE FOR CARRYING OUT THE INVENTION

Hereinafter, an embodiment of an automotive interior and exterior material according to the present invention will be described with reference to the accompanying drawings.

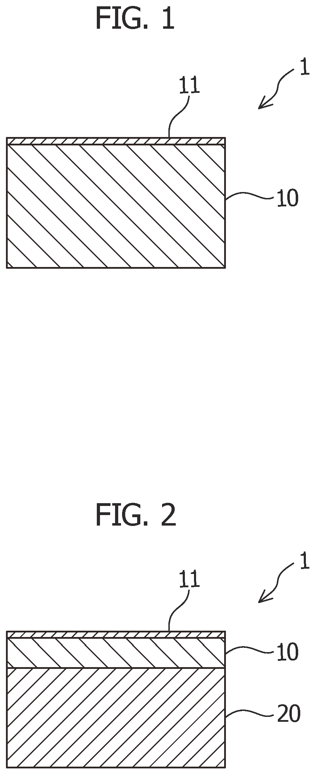

As illustrated in FIG. 1, an automotive interior and exterior material 1 according to the present embodiment includes a fiber material layer 10 made of a fiber material containing resin fiber having a melting point of 210°C or less. A film-formed portion 11 having a film shape obtained by melting the fiber material is formed on one surface of the fiber material layer 10. The surface of the film-formed portion 11 is not entirely a single film. The film-formed portion 11 has a plurality of holes. A film area ratio, which is the percentage of the area of the film portion of the film-formed portion 11 with respect to the surface area of the film-formed portion 11, is in the range of 35 to 99%. The film area ratio is preferably in the range of 35 to 95%. By setting the film area ratio in this range, the air resistance of the automotive interior and exterior material 1 can be controlled in the range of 500 to 1500 Ns/m$^3$.

Whether or not the fiber material of the film forming unit 11 has been formed into a film can be determined by observing and measuring the surface with a microscope. The depth from the surface of the film-formed portion 11 is measured with a microscope. A region in which the depth from the surface (that is, the height difference from the highest portion) exceeds 0.04 mm is not determined to be a film portion, that is, this region is determined to be a hole portion. A region in which the height difference from the highest portion is 0.04 mm or less is determined to be a film portion. Therefore, the film area ratio can be determined by calculating the percentage of the area of the film portion with respect to the area of the entire measurement region. An example of a microscope capable of observing and measuring the depth of the surface of the film-formed portion 11 is a digital microscope (VHX-8000) manufactured by Keyence Corporation.

The fiber material used for the fiber material layer 10 is not particularly limited, as long as it is a resin fiber material having a melting point of 210°C or less and melting by heat to form a film. Examples of the fiber material include thermoplastic resins such as polyesters including low-density polyethylene terephthalate (low-density PET); polyolefins such as polyethylene (PE), polypropylene (PP), and polybutylene; polystyrene; polyoxymethylene (POM); polyamides (PA11, PA12); polycarbonate (PC); and polymethyl methacrylate (PMMA), which may be used alone or in combination.

As described above, the fiber material used for the fiber material layer 10 preferably contains a resin fiber having a low melting point. By using the resin fiber having a low melting point, the heating temperature for forming a film of fiber material can be lowered, and the film area ratio can be easily controlled. The lower limit of the melting point of the low-melting point resin is not particularly limited, but may be, for example, 110°C or higher.

The content of the resin fiber having a low melting point in the fiber material of the fiber material layer 10 is preferably 30% or more, and less than 90%. The remaining portion of the fiber material layer 10 may be made of a resin fiber having a melting point of more than 210°C. Examples of such resin fiber having a high melting point include thermoplastic resins such as polyesters including polyethylene terephthalate (PET), polybutylene terephthalate (PBT), polytrimethylene terephthalate (PTT), and polyethylene naphthalate (PEN); polyamides (PA6, PA66); polyether ether ketone (PEEK); and polyimide (PI), which may be used alone or in combination.

As the fiber material used for the fiber material layer 10, for example, a fiber material having a core-sheath structure may be used, in which a resin having a low melting point is used for an outer sheath portion and a resin having a high melting point is used for a core portion such that only the outer sheath portion is melted by heating. More specifically, it is possible to use a core-sheath structure in which PET is used for the core portion and low-density PET is used for the sheath portion, a core-sheath structure in which PET is used for the core portion and PP is used for the sheath portion, or a core-sheath structure in which PET is used for the core portion and PE is used for the sheath portion. Of course, the fiber material may have a solid structure in which the entire fiber material is melted by heating.

As illustrated in Fig. 2, the automotive interior and exterior material 1 according to the present invention may include a base material layer 20 on a surface of the fiber material layer 10, the surface being opposite to the film-formed portion 11. The base material layer 20 is not particularly limited, as long as it is a base material commonly used for an automotive interior and exterior material. For example, fibers such as synthetic fibers such as polyester fibers, nylon fibers, and acrylic fibers, inorganic fibers such as glass wool and rock-wool, and metal fibers such as aluminum fibers can be used. The fibers used for the base material layer 20 include a fiber having a melting point of 210°C or higher as a main material (50% or more), and a fiber having a melting point of 210°C or lower can be mixed in order to impart shape retention. In addition, as the base material layer 20, for example, a material having air permeability, other than a fiber such as urethane, can also be used. When the base material layer 20 is made of fibers, the fiber layer 10 and the base material layer 20 can be bonded by needle punching.

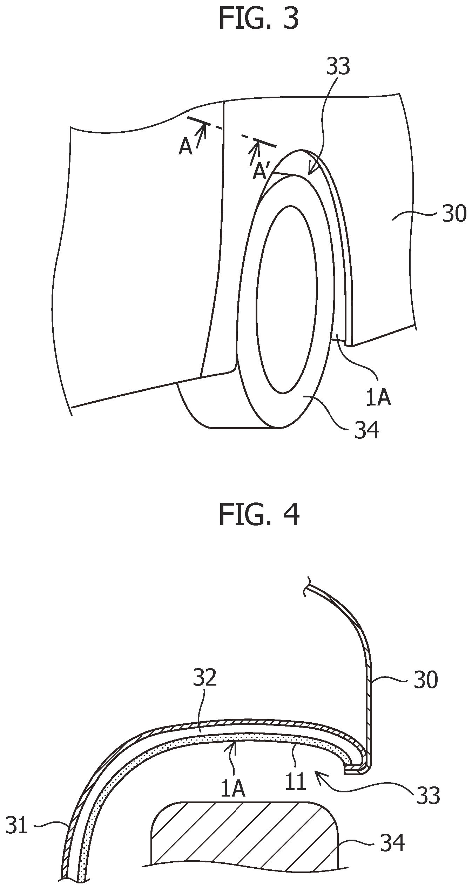

For example, the automotive interior and exterior material 1 having the above-described configuration can be used as a fender liner. As illustrated in FIGS. 3 and 4, a fender liner 1A is installed in a wheel house 33 of a vehicle 30. The fender liner 1A is mounted on a body panel 31 through a back air layer 32. In this case, the fender liner 1A is mounted so that the film-formed portion 11 is disposed over a tire 34. In this way, by disposing the film-formed portion 11 of the fender liner 1A such that the film-formed portion 11 faces the tire 34, for example, it is possible to absorb tire pattern noise generated by a tire and to impart water repellency and ice adhesion resistance.

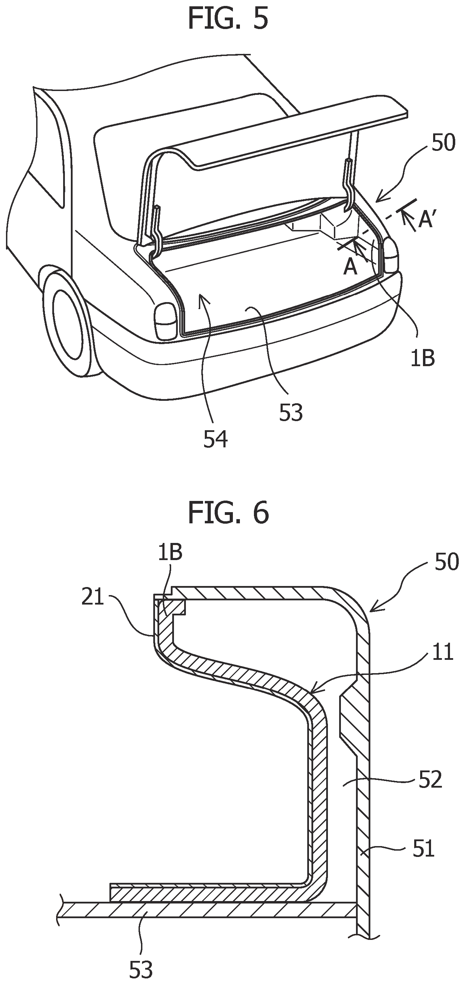

For example, the automotive interior and exterior material 1 can be used as a trunk side trim. As illustrated in FIGS. 5 and 6, a trunk side trim 1B is installed in a trunk 54 of a vehicle 50. The trunk side trim 1B is mounted on a floor material 53 and a body panel 51 via a back air layer 52 with respect to the body panel 51. In this case, the trunk side trim 1B is mounted such that the film-formed portion 11 is disposed over the body panel 51. As illustrated in FIG. 6, a skin layer 21 may be provided on a surface of the trunk side trim 1B, the surface being opposite to the film-formed portion 11. The skin layer 21 is not particularly limited, as long as it is commonly used as a skin layer of an automotive interior and exterior material. For example, a tufted carpet or a spunbond nonwoven fabric made of long fibers, or a needle punched carpet or a wet-laid nonwoven fabric made of short fibers may be used. In this way, by disposing the film-formed portion 11 of the trunk side trim 1B over the body panel 51, for example, even with a material including only the fiber material layer, it is possible to control the design characteristics, the sound absorption performance, and the sound insulation performance.

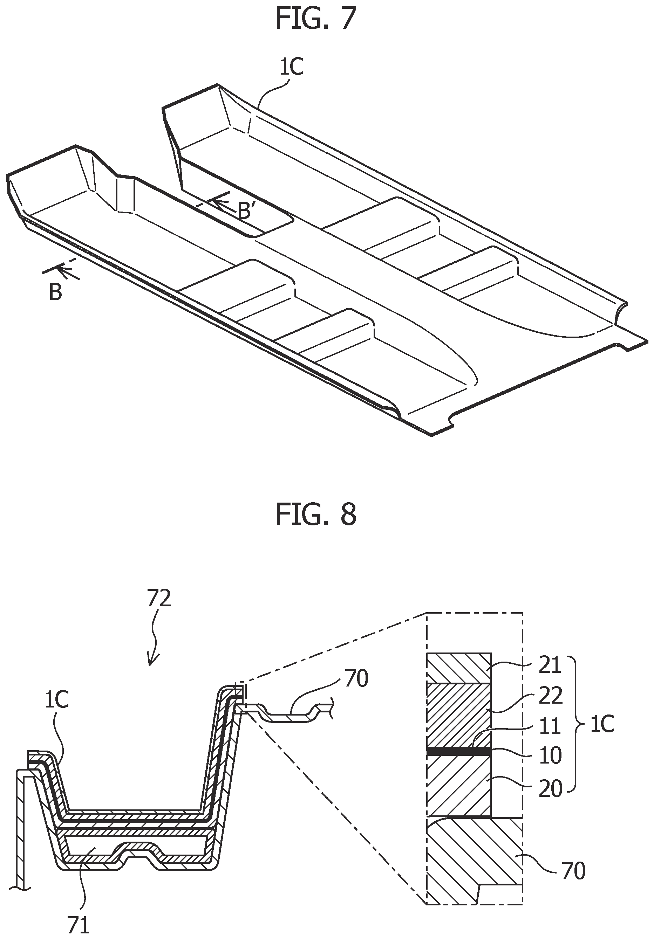

Furthermore, the automotive interior and exterior material 1 can be used as a floor carpet, for example. As illustrated in FIGS. 7 and 8, a floor carpet 1C is attached to a body panel 70 via a spacer 71. In this case, the floor carpet 1C preferably has a laminated structure of a base material layer 20, a fiber material layer 10, an adhesive layer 22, and a skin layer 21, in this order, from the body panel 70. In the case in which the film-formed portion 11 of the fiber material layer 10 is provided with the skin layer 21, since the fiber material of the film-formed portion 11 is formed into a film, it is preferable to provide the adhesive layer 22 between the skin layer 21 and the film-formed portion 11. The adhesive layer 22 is not particularly limited, but it can be formed using, for example, an epoxy-based adhesive, an acrylic-based adhesive, an olefin-based adhesive, or a rubber-based adhesive. In this way, the film-like portion 11 of the floor carpet 1C is disposed in the direction of a vehicle interior 72, and is combined with the base material layer 20, such that the sound absorbing and insulating properties can be controlled.

Although a fender liner, a trunk side trim, and a floor carpet have been described as specific examples of use of the automotive interior and exterior material 1, the present invention is not limited thereto, and it can be widely used for other interior and exterior members.

The automotive interior and exterior material according to the present invention may be formed to have water repellency when used for a fender liner or the like. In order to make the automotive interior and exterior material are water repellent, for example, a fiber material layer is produced by using a fiber material of which the surface has been subjected to a water repellent treatment. Next, the fiber material layer is heated and molded to form a film-formed portion. In this way, the fiber material subjected to the water repellent treatment is melted, and a fiber material layer having an enhanced water repellency at the surface of the film-formed portion can be obtained. Alternatively, by spraying the water repellent agent on the surface of the fiber material layer before forming a film, and then heating and molding the fiber material layer to form a film-formed portion, the fiber material subjected to the water repellent treatment is melted in the same manner, and the fiber material layer having an enhanced water repellency on the surface of the film-formed portion can be formed. Alternatively, the fiber material layer may be heated and molded to form a film-formed portion, and the water repellent agent may be sprayed on the surface of the film-formed portion. In this way, a film-formed portion having water repellency can also be obtained. The water repellent agent is not particularly limited, but a water-soluble fluorine-based water repellent agent is preferably used.

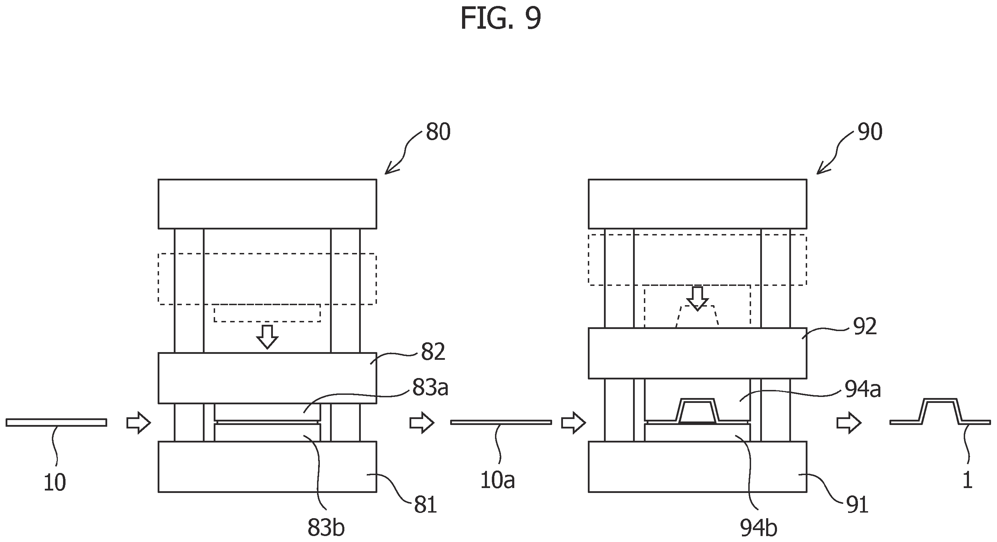

Next, an example of a method for manufacturing the automotive interior and exterior material according to the present invention will be described. As illustrated in FIG. 9, first, a sheet material 10 including a fiber material layer made of a fiber material and a base material layer is prepared. Next, the sheet material 10 is fed into a press machine 80 provided with hot plates 83 such that the fiber material layer faces upward. In the press machine 80, a lower hot plate 83b is attached to a fixed bed portion 81, and an upper hot plate 83a is attached to a slide portion 82 that can be moved up and down. By pressing and heating the sheet material 10 with the upper hot plate 83a and the lower hot plate 83b heated to a predetermined temperature, a sheet material 10a in which the fiber material is melted in a film shape on a surface of the sheet material 10, the surface facing the upper hot plate 83a, can be obtained.

Next, the sheet material 10a, which is still hot, is fed into a press machine 90 having molds 94 at room temperature. In the press machine 90, a lower mold 94b is attached to a fixed bed portion 91, and an upper mold 94a is attached to a slide portion 92 that can be moved up and down. The molds 94 can form the sheet material 10a into the shape of, for example, the fender liner, the trunk side trim, or the floor carpet described above. By pressing and molding the sheet material 10a with the upper mold 94a and the lower mold 94b, the surface of the sheet material 10a, the surface having been melted into a film shape, is cooled, and a film-formed portion is formed. Thus, the automotive interior and exterior material 1 molded into a predetermined shape can be obtained.

Although an example of manufacturing the automotive interior and exterior material 1 from the sheet material 10 including the fiber material layer and the base material layer by using the press machine 80 has been described, the automotive interior and exterior material can be manufactured by the press machine 80 even with a sheet material including only the fiber material layer. In this case, the heating temperature of the lower hot plate 83b is set to be lower than the heating temperature of the upper hot plate 83a. In this way, it is possible to ensure the moldability of the sheet material while suppressing the formation of a film of fiber material on a surface of the sheet material, the surface facing the lower hot plate 83b. Examples

Although examples of the present invention and comparative examples will be described below, the present invention is not limited to these examples.

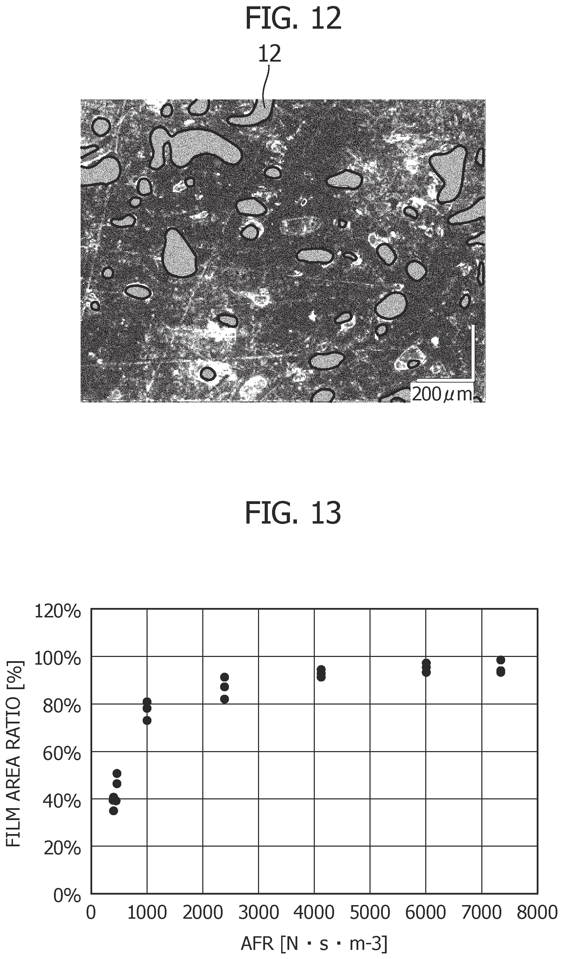

An individual fiber material layer made of a nonwoven fabric having a thickness of 4 mm and an area weight of 790 g/m$^2$ was prepared by a needle punching method, by using a resin fiber made of polypropylene as a fiber material. One surface of the fiber material layer was heated at a temperature range of 180 to 210°C for 60 seconds such that the fiber material is melted into a film shape. The film area ratio and the airflow resistance of the individual sample having the film-formed portion formed on the one surface were measured. The results are shown in FIG. 13.

(Measurement of Film Area Ratio)

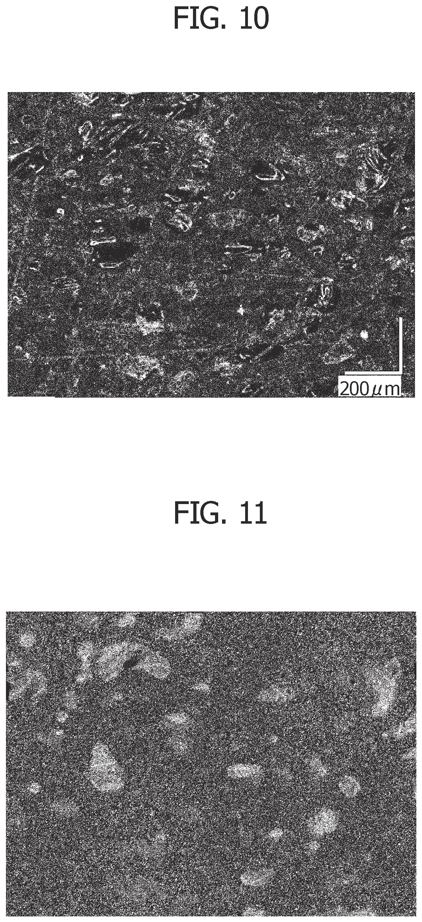

The film area ratio was measured as follows. The surface of the film-formed portion wase photographed at a magnification of 200 times by using a digital microscope (VHX-8000, manufactured by Keyence Corporation). Specifically, a focus stacking image from the lowest portion to the highest portion in focus was photographed by using a "3D focus stacking" function. FIG. 10 illustrates a microscope image photographed by using the function. The area of the region of the film-formed portion measured at a magnification of 200 times was 403643.12 $\mu$m$^2$.

Next, the obtained image was displayed in 3D and subjected to inclination correction, and then the height difference of the surface of the film-formed portion was displayed by color mapping as illustrated in Fig. 11. In FIG. 11, the height difference is displayed in a range from 0.000 mm to 0.121 mm at maximum by gradation from dark blue, green, yellow, and red, in this order.

Next, the image was subjected to an "automatic area measurement" function, "hue" in "manual extraction" of "color" was selected as the extraction method in the function. As illustrated in FIG. 12, the regions in which the height difference from the highest portion exceeded 0.04 mm were recognized by a color as the hole portions 12, and the area (unit: $\mu$m$^2$) was obtained. Then, the film area ratio was calculated by the following formula.

(Formula 1)

$$\text{Film Area Ratio (\%)} = \frac{Area\ of\ Measurement\ Region - Area\ of\ Hole\ Portions}{Area\ of\ Measurement\ Region} \times 100$$

(Measurement of Airflow Resistance)

The airflow resistance was measured by using an airflow resistance measuring device (Nor1517A, manufactured by Norsonic Corporation), based on "Method B" of "Method for Measuring Airflow Resistance of Air-Conditioning Equipment" of "Airflow Rate Measuring Device for Air-Conditioning" defined in ISO 9053:1991. The individual sample was sandwiched between the measurement container and the lid of the airflow resistance measuring device, and the lid was then locked. The stroke amount of the pressure fluctuation piston was set to 2.8 mm. The motor of the airflow resistance measuring device was then started to operate the pressure fluctuation piston, and a mean value for 10 seconds at a sound pressure level of 2 Hz in a 1/3 octave band was obtained as the measured value of the airflow resistance (AFR). The unit of the measured values was $Ns/m^3$. The diameter of the measurement container of the airflow resistance measuring device was a 100 mm, and the diameter of the sample was 120 mm or more.

As illustrated in Fig. 13, samples (N = 3) having a film area ratio of about 35 to 50% had an airflow resistance of about 400 to 450 $Ns/m^3$, whereas samples (N = 3) having a film area ratio of about 75 to 80% had an increased airflow resistance of about 1000 $Ns/m^3$. In addition, samples (N = 5) having a film area ratio of about 80 to 90% had an airflow resistance of about 2400 $Ns/m^3$, samples (N = 5) having a film area ratio of 92 to 95% had an airflow resistance of about 4100 $Ns/m^3$, samples (N = 5) having a film area ratio of 95 to 98% had an airflow resistance of about 6000 $Ns/m^3$, and samples (N = 5) having a film area ratio of 93 to 99% had an airflow resistance of about 7300 $Ns/m^3$. The airflow resistance increased as the film area ratio increased. As described above, it was confirmed that the airflow resistance can be controlled from less than 500 $Ns/m^3$ to more than 6500 $Ns/m^3$ by changing the film area ratio, without changing the density of the fiber material in an individual sample.

Although embodiments and examples of the present invention have been described above, the present invention is not limited to these embodiments and examples, and various modifications and changes can be made within the scope of the claims.

The method for manufacturing the automotive interior and exterior material according to the present invention can be described as the following [1] to [8].

[1] A method for manufacturing an automotive interior and exterior material, the method including a step of heating one surface of a fiber material layer made of a fiber material containing resin fiber having a melting point of 210°C or less to melt this fiber material into a film shape, wherein the film area ratio, which is the percentage of the area of a film portion to the surface area of a film-formed portion formed on the one surface of the fiber material layer, is 35 to 99%.

[2] The method for manufacturing an automotive interior and exterior material according to [1], further including a step of press-molding the fiber material layer after the heating, wherein the film-formed portion is formed by cooling the fiber material melted into the film shape.

[3] The method for manufacturing an automotive interior and exterior material according to [1] or [2], further including a base material layer laminated on a surface of the fiber material layer, the surface being opposite to the film-formed portion.

[4] The method for manufacturing an automotive interior and exterior material according to [1] or [2], wherein the film area ratio of the fiber material layer is 35 to 95%.

[5] The method for manufacturing an automotive interior and exterior material according to [1] or [2], wherein the airflow resistance of the automotive interior and exterior material is 500 to 1500 $Ns/m^3$.

[6] The method for manufacturing an automotive interior and exterior material according to [1] or [2], wherein the content of a low melting point resin in the fiber material layer is 30% or more and less than 90%.

[7] The method for manufacturing an automotive interior and exterior material according to [1] or [2], wherein the fiber material layer includes a fiber material subjected to a water repellent treatment.

[8] The method for manufacturing an automotive interior and exterior material according to [3], wherein the base material layer is made of fiber, and the fiber material layer and the base material layer are needle-punched.

REFERENCE SYMBOL LIST

1          Automotive interior and exterior material
1A         Fender liner

| 1B | Trunk side trim |
| 1C | Floor carpet |
| 10 | Fiber material layer |
| 11 | Film-formed portion |
| 20 | Base material layer |
| 21 | Skin layer |
| 22 | Adhesive layer |
| 30, 50, 70 | Body panel |
| 80, 90 | Press machine |

**Claims**

1. An automotive interior and exterior material comprising:

   a fiber material layer made of a fiber material containing resin fiber having a melting point of 210°C or less; and
   a film-formed portion having a film shape obtained by melting the fiber material on one surface of the fiber material layer,
   wherein a film area ratio, which is a percentage of an area of a film portion of the film-formed portion with respect to a surface area of the film-formed portion, is 35 to 99%.

2. The automotive interior and exterior material according to claim 1, further comprising a base material layer laminated on a surface of the fiber material layer, the surface being opposite to the film-formed portion.

3. The automotive interior and exterior material according to claim 1 or 2, wherein a film area ratio of the fiber material layer is 35 to 95%.

4. The automotive interior and exterior material according to claim 1 or 2, wherein an airflow resistance of the automotive interior and exterior material is 500 to 1500 Ns/m$^3$.

5. The automotive interior and exterior material according to claim 1 or 2, wherein a content of the resin fiber in the fiber material layer is 30% or more and less than 90%.

6. The automotive interior and exterior material according to claim 1 or 2, wherein the fiber material is subjected to a water repellent treatment.

7. The automotive interior and exterior material according to claim 2, wherein the base material layer is made of fiber, and the fiber material layer and the base material layer are needle-punched.

# FIG. 1

# FIG. 2

# FIG. 3

# FIG. 4

# FIG. 5

# FIG. 6

# FIG. 7

# FIG. 8

FIG. 9

# FIG. 10

# FIG. 11

# FIG. 12

# FIG. 13

## INTERNATIONAL SEARCH REPORT

| | International application No. |
| --- | --- |
| | **PCT/JP2024/035416** |

### A. CLASSIFICATION OF SUBJECT MATTER

***B60R 13/08***(2006.01)i; ***B32B 5/26***(2006.01)i; ***D04H 1/46***(2012.01)i; ***D04H 1/498***(2012.01)i; ***G10K 11/168***(2006.01)i
FI:   B60R13/08; B32B5/26; D04H1/498; D04H1/46; G10K11/168

According to International Patent Classification (IPC) or to both national classification and IPC

### B. FIELDS SEARCHED

Minimum documentation searched (classification system followed by classification symbols)

B60R13/08; B32B5/26; D04H1/46; D04H1/498; G10K11/168

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2017-039453 A (HIROTANI KK) 23 February 2017 (2017-02-23)<br>paragraphs [0031]-[0097], fig. 1-9 | 1-7 |
| Y | JP 2009-001045 A (HAYASHI ENGINEERING INC.) 08 January 2009 (2009-01-08)<br>paragraphs [0009], [0029]-[0030], [0060] | 1-7 |
| A | JP 2015-205688 A (HIROTANI KK) 19 November 2015 (2015-11-19)<br>paragraphs [0023]-[0110], fig. 1-14 | 1-7 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 December 2024** | **24 December 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/035416**

| Patent document cited in search report | | | Publication date (day/month/year) | Patent family member(s) | | Publication date (day/month/year) |
|---|---|---|---|---|---|---|
| JP | 2017-039453 | A | 23 February 2017 | (Family: none) | | |
| JP | 2009-001045 | A | 08 January 2009 | US 2010/0078927 A1 paragraphs [0019], [0070]-[0071], [0130] WO 2008/155962 A1 CA 2689222 A1 CN 101711208 A | | |
| JP | 2015-205688 | A | 19 November 2015 | (Family: none) | | |

Form PCT/ISA/210 (patent family annex) (July 2022)

**EP 4 755 724 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4054826 B